# EUROPEAN PATENT APPLICATION

(11) **EP 4 325 110 A1**
(43) Date of publication of application: **21.02.2024**
(21) Application number: 22788285.9
(22) Date of filing: 23.03.2022
(51) Int. Cl.: F17C 13/04, F17C 13/12, F16K 31/06, F16K 15/04

(54) **SOLENOID VALVE FOR HIGH-PRESSURE CONTAINER**

(30) Priority: 16.04.2021 KR 20210049757
(71) Applicant: Youngdo Ind. Co., Ltd., Busan 46751 (KR)
(72) Inventor: KANG, Jeong Hwan, Busan 46751 (KR); KIM, Seong Ju, Busan 46751 (KR)
(74) Representative: Lambacher, Michael
(86) International application number: PCT/KR2022/004032
(87) International publication number: WO 2022/220428

(57) **Abstract**

A solenoid valve for a high-pressure container of the present invention comprises: a body portion; a valve seat which is installed on the lower portion of the body portion and has a discharge port through which a raw material gas is discharged; a coil to which electric power is applied; a core installed on the inner surface of the body portion; a lower plunger; an upper plunger; an operating rod arranged in the upper plunger; a spring arranged between the core and the operating rod; and a ball member of a spherical shape which is in contact with the lower surface of the operating rod and is seated on a seating portion formed on the lower side of the upper plunger to open/close an orifice. Thus, the hermetic state can be maintained at low pressure, and leakage in the low-pressure state can be prevented.

## Description

### TECHNICAL FIELD

The present invention relates to a solenoid valve for a high-pressure container, which controls the flow of a raw material gas when the raw material gas is filled in the high-pressure container storing a high-pressure raw material gas or is supplied to a gas-consuming unit.

### BACKGROUND ART

Currently, in the case of a hydrogen fuel cell system, a valve assembly is provided in a high-pressure container storing a raw material gas to control the flow of the raw material gas when the raw material gas is charged into the high-pressure container, and to control the flow of the raw material gas, when the raw material gas stored in the high-pressure container is supplied to a gas-consuming unit.

A solenoid valve is provided in such a valve assembly, to precisely control the flow of a raw material gas precisely according to an electric signal, to keep the pressure of the raw material gas stored in a high-pressure container to be constant, and to prevent explosion of a high-pressure container when a hydrogen fuel cell vehicle overturns or a fire occurs therein.

As disclosed in Korean Patent No. 10-1821597 published on January 18, 2018, a conventional solenoid valve includes: a lower plunger movably arranged on an inner surface of a valve body, having an orifice formed therein, and having a contact portion integrally formed to be close in contact with a valve seat on a lower surface of the valve body; and an operating unit arranged to be linearly movable on an upper side of the lower plunger, operating in conjunction with the lower plunger, linearly moving when power is applied to a coil, and having an operating rod formed to be in close contact with the orifice.

Such a conventional solenoid valve is a high-pressure solenoid valve that controls the flow of the high-pressure raw material gas, and such a high-pressure solenoid valve has a problem of leakage at low pressure.

In particular, when such a high-pressure solenoid valve is applied to a hydrogen fuel cell system for vehicles, there is a problem that fuel gas leaks at low pressure due to vibration generated when driving the vehicles.

### DISCLOSURE

### TECHNICAL PROBLEM

Therefore, the task of the present invention is to provide a solenoid valve for a high-pressure container capable of preventing leakage at low pressure of a solenoid valve used for high-pressure.

### TECHNICAL SOLUTION

According to an aspect of the present invention, there is provided a solenoid valve for a high-pressure container including: a body portion having an inlet formed in a lower portion thereof in which a raw material gas flows in the inlet; a valve seat which is installed on the lower portion of the body portion and has a discharge port through which the raw material gas is discharged; a coil which is wound on an outer circumferential surface of the body portion and to which electric power is applied; a core installed on an inner surface of the body portion; a lower plunger movably arranged on an inner surface of the body portion, having an orifice formed therethrough, and having a lower surface in close contact with the valve seat to open and close the discharge port; an upper plunger arranged on an upper side of the lower plunger to be linearly movable and linearly moving when power is applied to the coil; an operating rod arranged in the upper plunger to be linearly movable; a spring arranged between the core and the operating rod to provide an elastic force to the operating rod; and a ball member of a spherical shape which is in contact with a lower surface of the operating rod and is seated on a seating portion formed on a lower side of the upper plunger to open/close an orifice.

The ball member may be formed of a metal material, and the upper plunger, the lower plunger, and the operating rod may be formed of a non-metal material.

The lower plunger includes: a curved contact portion which is formed on a lower surface of the lower plunger, so as to be in close contact with an upper surface of the valve seat to perform an opening/closing action; a cylindrical portion into which the upper plunger is inserted to be linearly movable and which is formed on an upper surface of the lower plunger; and a protrusion in which the orifice is formed and protrudes in the center of an upper surface of the lower plunger.

The upper plunger includes: a third space portion which is formed so that which the operating rod is linearly moved; and a seating portion in which the ball member is seated on a lower end of the third space portion. The seating portion includes: an inclined surface formed on an inner surface of the seating portion and having an inner diameter narrowed downward; and an discharge port which is formed on a lower surface of the seating portion, and through which a part of the ball member is withdrawn downward from the seating portion. The discharge port may be formed to have a smaller inner diameter than the diameter of the ball member to prevent the ball member from being separated from the seating portion.

The ball member is characterized in that when the solenoid valve is closed, the lower portion thereof is in close contact with an upper surface of the orifice to seal the orifice, and has a gap (T) with the inclined surface.

The operating rod has a spring insertion portion formed on an upper portion thereof to have a small outer diameter and into which a spring is inserted, and has a lower surface which is in contact with the ball member and is formed in a planar shape to allow the ball member to be in contact with the lower surface in a rollable motion.

### ADVANTAGEOUS EFFECTS

As described above, the solenoid valve for a high-pressure container according to the present invention is provided with a ball member to be rolled on an upper plunger, so as to maintain airtightness at low pressure and prevent deformation due to even an opening and closing action at high-pressure by opening and closing the orifice while rolling the ball member.

### BRIEF DESCRIPTION OF THE DRAWINGS

FIG. 1 is a cross-sectional view illustrating a valve assembly for a high-pressure container according to an embodiment of the present invention.
FIG. 2 is a cross-sectional view of a solenoid valve for a high-pressure container according to an embodiment of the present invention.
FIG. 3 is a partially enlarged cross-sectional view of a solenoid valve for a high-pressure container according to an embodiment of the present invention.

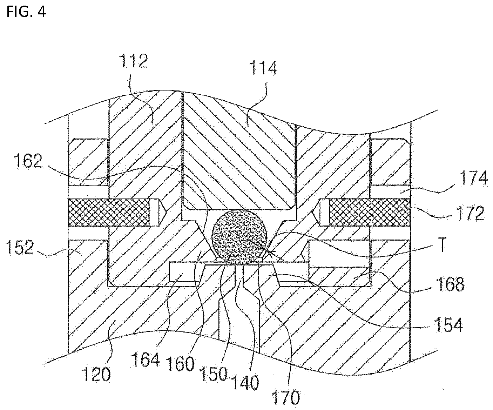

FIG. 4 is a partially enlarged cross-sectional view of a solenoid valve for a high-pressure container according to an embodiment of the present invention.
FIGS. 5 and 6 are cross-sectional views for illustrating operational states of a solenoid valve according to an embodiment of the present invention.

### BEST MODE

Hereinafter, embodiments of the present invention will be described in detail with reference to the accompanying drawings. The sizes and shapes of the components shown in the drawings may be exaggerated for clarity and convenience. In addition, terms defined in consideration of the configuration and operation of the present invention may vary depending on the intention or custom of the user, the operator, and the like. Definitions of these terms should be based on the content of this specification.

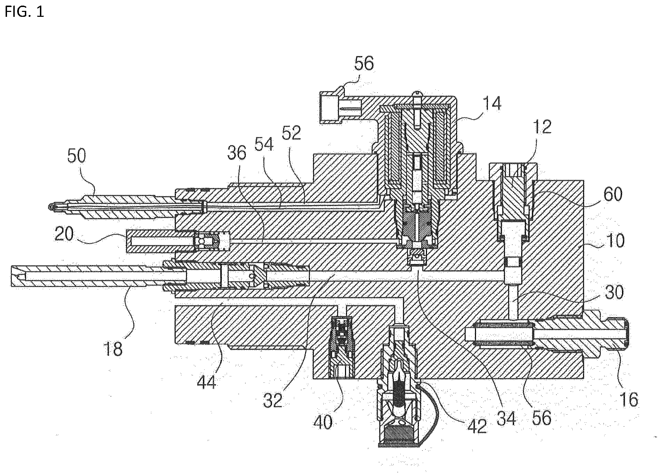

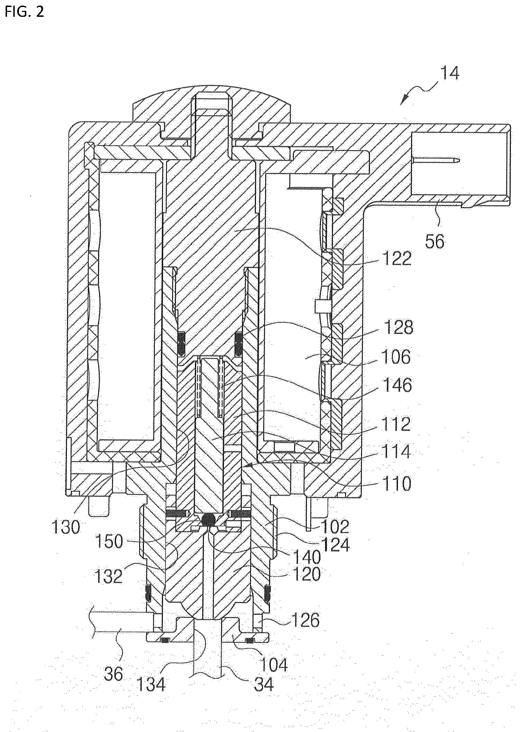

FIG. 1 is a cross-sectional view illustrating a valve assembly for a high-pressure container according to an embodiment of the present invention, and FIG. 2 is a cross-sectional view of a solenoid valve for a high-pressure container according to an embodiment of the present invention.

According to an embodiment of the present invention. a valve assembly for a high-pressure container includes: a valve body 10 mounted on a high-pressure container in which a raw material gas is stored; a manual valve 12 mounted on the valve body 10 to manually open and close a flow path through which the raw material gas passes; and a solenoid valve 14 mounted on the valve body 10 to automatically open and close the flow path according to an electrical signal.

The valve body 10 is equipped with: an discharge port pipe 16 to which an external raw material gas line is connected and through which the raw material gas enters and exits; a charging pipe 18 arranged to be inserted into a high-pressure container 100 and through which the raw material gas passes when charging a raw material gas into the high-pressure container 100; and a service pipe 20 through which raw material gas passes when consuming the raw material gas stored in the high-pressure container 10.

The flow path through which raw material gas passes is formed inside the valve body 10, and the flow path includes: a first flow path 30 connected between the discharge port pipe 16 and the manual valve 12; a second flow path 32 connected between the manual valve 12 and the charging pipe 18; a third flow path 34 branched from the second flow path 32 and connected to the solenoid valve 14; and a fourth flow path 36 connected between the solenoid valve 14 and the service pipe 20.

The second flow path 32 has a large inner diameter so that the high-pressure container 100 may be charged with the raw material gas in a short time, and Since the fourth flow path 36 is a line in which the raw material gas stored in the high-pressure container 100 is supplied to a consuming unit, the inner diameter of the fourth flow path 36 is smaller than that of the first flow path 32.

In addition, the valve body 10 includes: an overflow blocking valve 40 configured to prevent raw material gas inside the high-pressure container 100 from being abnormally excessively discharged when the pipe of the vehicle is broken during a vehicle accident or a rollover; and a pressure release device 42 configured to discharge the raw material gas to the outside when the pressure in the high-pressure container 100 rises up due to temperature in the event of a fire due to the vehicle accident, or the like.

The overflow blocking valve 40 and the pressure release device 42 are connected to a fifth flow path 44 formed in the valve body 10, and the fifth flow path 44 is connected to the high-pressure container 100 to introduce the raw material gas stored in the high-pressure container 100 into the fifth flow path 44.

In addition, a temperature sensor 50 is mounted on the valve body 10, and the temperature sensor 50 senses the temperature inside the high-pressure container 100 and applies the sensed temperature signal to a control unit.

A cable 54 connected to the temperature sensor 50 passes through a passage 52 formed in the valve body 10 and is connected to a connector 56 of the solenoid valve 14. As such, since the cable electrically connected to the temperature sensor is integrated and connected to the connector 56 of the solenoid valve 14, a separate connector for connecting the temperature sensor cable 54 is unnecessary, thereby simplifying the structure.

The high-pressure container 100 is a container that can sufficiently secure storage of a raw material gas of 700 Bar or more.

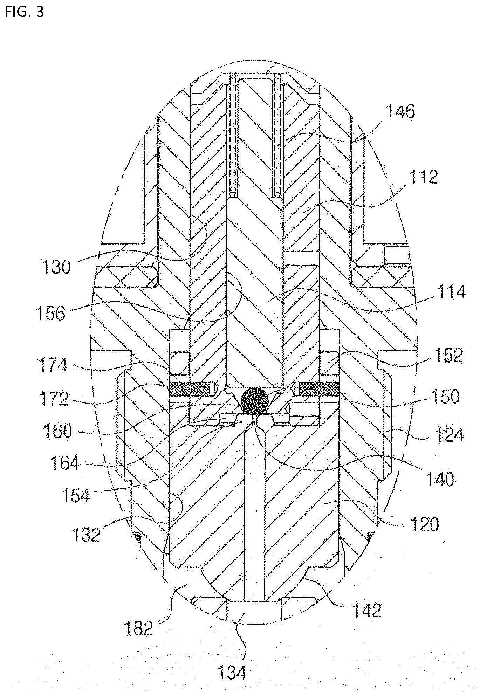

FIG. 2 is a cross-sectional view of a solenoid valve according to an embodiment of the present invention, and FIG. 3 is a partially enlarged cross-sectional view of a solenoid valve according to an embodiment of the present invention.

The solenoid valve 14 plays a role of connecting the third flow path 34 with the fourth flow path 36 when supplying the raw material gas to a gas-consuming unit, and includes: a body portion 102 mounted on the valve body 10; a valve seat 104 mounted on a lower portion of the body portion 102 and communicated with the third flow path 34, a coil 106 which is mounted on the outer circumferential surface of the body portion 50 and to which power is applied; an operating unit 110 which is mounted on the inner circumferential surface of the body portion 102 so as to be linearly movable and which is linearly moved by interaction with the coil 106 when power is applied to the coil 106; and a lower plunger 120 which is operated in association with the operating unit 110 and brought into close contact with or separated from the valve seat 104 to open and close the flow path.

The body portion 102 is formed in a cylindrical shape with its top and bottom surfaces opened. The top surface of the body portion 102 is fitted with a core 122 for sealing the top surface of the body portion 102. The lower-side outer circumferential surface of the body portion 102 is provided with a screw coupling portion 124 formed to be screw-coupled with the valve body 10. An inlet port 126 communicating with the fourth flow path 36 and through which the raw material gas enters and exits is formed on the lower side surface of the body portion 102.

The core 122 is screw-coupled on the upper portion of the body portion 102 and a first seal ring 128 is mounted on the outer circumferential surface thereof to prevent fluid from flowing out.

The inside of the body portion 102 includes: a first space portion 130 in which the operating unit 110 is arranged to be linearly moved; and a second space portion 132 which is arranged on the lower side of the first space portion 130, is formed to have a larger inner diameter than the first space portion 130, and in which the lower plunger 120 is arranged to be linearly moved.

The valve seat 104 is fixed to the bottom surface of the body portion 102 and a discharge port 134 through which raw material gas is discharged is formed therein.

The lower plunger 120 has an orifice 140 penetrating the center thereof in the vertical direction to allow the raw material gas to pass therethrough, and A curved contact portion 142 is formed on the bottom surface of the lower plunger 120 to be in close contact with the top surface of the valve seat 104 to open and close the discharge port 134.

The operating unit 110 is installed in the first space portion 130 of the body portion 102 to be able to move linearly, and includes: an upper plunger 112 linearly moving through an interaction when power is applied to the coil 106; an operating rod 114 inserted into the inner surface of the upper plunger 112 to be linearly moved; a ball member 150 arranged on the bottom surface of the operating rod 114 to open and close the orifice 140; and a spring 146 installed between the operating rod 114 and the core 122 to provide an elastic force to allow the ball member 150 to be in close contact with the orifice 140.

A cylindrical portion 152 into which the upper plunger 112 is slidably inserted is formed above the lower plunger 120, and a protrusion portion 154 protruding upward is formed in the center of the top surface of the lower plunger 120, and the orifice 140 is formed in the center of the protrusion portion 154.

The operating rod 114 has a spring insertion portion 118 formed on an upper portion thereof to have a small outer diameter and into which a spring 146 is inserted, and the bottom surface of the operating rod 114 which is in contact with the ball member 150, is formed in a plane shape to allow the ball member 150 to come in contact with the bottom surface of the operating rod 114 in a rollable motion.

The upper plunger 112 has a third space portion 156 into which the operating rod 114 is inserted, and a seating portion 160 is formed at the lower side of the third space portion 156 so that the ball member 150 is not separated from the upper plunger 112 and the ball member 150 is positioned to be freely moved to the lower side of the third space portion 156.

The seating portion 160 has an inclined surface 162 formed on an inner surface of the seating portion 160, wherein the inner diameter becomes narrower toward the lower direction, an discharge port 170 in which a part of the ball member 150 is drawn out in the lower side direction of the upper plunger 112 is formed at the lower end of the seating portion 160, and The inner diameter of the discharge port 170 is formed to be smaller than the diameter of the ball member 150 to prevent the ball member 150 from being pulled out.

When the solenoid valve 14 is closed, the ball member 150 is pressed by the pressing force of the lower plunger 120. In this case, the gap T between the inclined surface 162 of the seating portion 160 and the ball member 150 is maintained, so that the ball member 150 has a structure capable of performing a rolling motion within a predetermined range inside the seating portion 160.

In this way, when the solenoid valve 14 is closed, the ball member 150 moves in a rollable motion inside the seating portion 160 and matches the orifice 140, and leakage may be prevented through the orifice 140 in a state of being in close contact with the orifice 140 and in a low pressure state.

In the case of a conventional solenoid valve, a rod portion is formed on an upper plunger to open and close an orifice of a lower plunger. In this case, when a high-pressure is applied to the upper plunger, the rod portion of the upper plunger strongly impacts on the lower plunger. When the rod portion of the upper plunger repeatedly contacts the lower plunger with high-pressure for opening and closing the orifice, the rod portion is damaged and the lower plunger is also deformed by the impact, to thereby cause a deformation.

In this embodiment, the ball member 150 is formed of a metal material, and the upper plunger 112, the lower plunger 120, and the operating rod 114 are formed of a non-metal material that is not deformed by high-pressure. The deformation of the ball member 150 due to the high-pressure impact in which the valve is opened and closed may be prevented, and the deformation of the upper plunger 112, the lower plunger 120, and the operating rod 114 due to repeated opening and closing may be prevented.

In particular, in the case of valves, the parts that make up the valve are deformed by impact due to repeated use, and there is a problem that leakage occurs when the valve is at low pressure due to this deformation. The solenoid valve according to this embodiment is a component that opens and closes the orifice, and by using a spherical ball member, it is possible to maintain the airtightness of the orifice 170 even under low pressure while preventing deformation due to repeated use.

The materials of the upper plunger 112, the lower plunger 120, and the operating rod 114 may be formed of a plastic-based material that can withstand high-pressure such as polyetheretherketone (PEEK) material, polyamideimide (PAI) material, and polyimide (PI) material.

A partition wall portion 168 protruding in a cylindrical shape is formed at a lower end of the upper plunger 90 to form a first chamber 164 into which a fluid is introduced between the partition wall portion 168 of the upper plunger 112 and the protrusion portion 154 of the lower plunger 120. In addition, a second chamber 182 communicating with the fourth flow path 36 is formed under the lower plunger 120.

A latching pin 172 is mounted on the lower outer surface of the upper plunger 112, and a latching slot 174 is formed in a cylinder 152 of the lower plunger 120 so that the latching pin 172 is inserted into the latching slot 174 so as to be locked therewith. Here, the latching slot 174 is formed to secure a predetermined space in the vertical direction so that the latching pin 172 can be moved within a preset range of the latching slot 174 in the vertical direction.

Thus, the upper plunger 112 and the lower plunger 120 are latched by the latching pin 172 and prevented from being separated from each other.

The operation of the solenoid valve according to one embodiment of the present invention thus constructed will be described below.

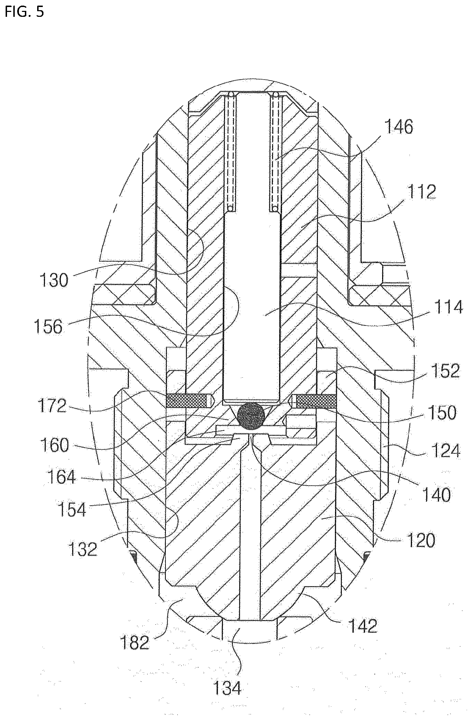

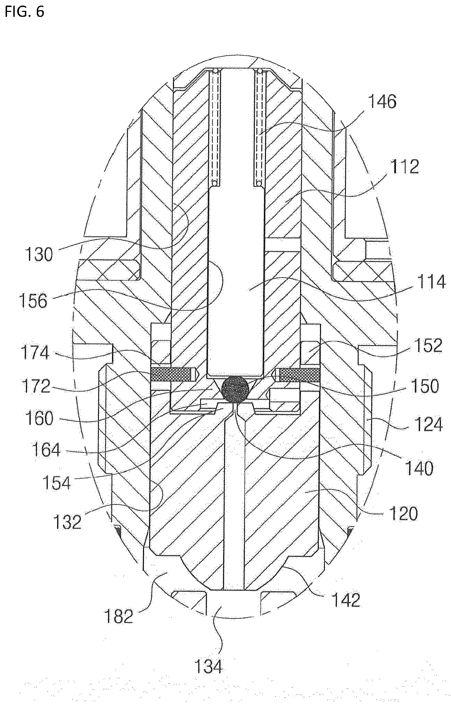

First, FIGS. 5 and 6 are cross-sectional views sequentially illustrating operations of the solenoid valve according to an embodiment.

First, as described in FIG. 3, the lower plunger 120 is in close contact with the valve seat 104, and the ball member 150 is in close contact with the orifice 140 by the elastic force of the spring 146, and thus, the fourth flow path 36 is in a closed state and the supply of raw material gas to the gas-consuming unit is blocked.

In this case, the ball member is in close contact with the orifice 140 to maintain a closed state, thereby preventing leakage at low pressure and preventing low pressure leakage due to vibration of the vehicle.

In this state, as shown in FIG. 5, when the coil 106 is energized, the upper plunger 112 is lifted and the operating rod 94 inserted into the upper plunger 112 is lifted, and accordingly the orifice 86 is opened.

Then, the high-pressure raw material gas filled in the chamber 164 is discharged through the orifice 140, and the raw material gas filled in the outside and inside of the chamber 165 and the upper plunger 112 is brought into a low-pressure state.

In addition, as illustrated in FIG. 6, a high-pressure raw material gas filled in the second chamber 182 formed under the lower plunger 120 acts on the lower portion of the lower plunger 120, thereby generating a pressure difference between the first chamber 164 and the second chamber 182, and opening the discharge port 134 of the valve seat 104 (134).

In addition, the high-pressure fluid acting on the lower portion of the lower plunger 120 acts on the upper portion of the lower plunger 120 and the high-pressure fluid is applied to both the lower plunger 120 and the upper plunger 112. The discharge port 134 is opened and the fourth flow path 36 communicates with the third flow path 34, and thus, the raw material gas stored in the high-pressure container is supplied as a gas-consuming unit.

While the present invention has been particularly shown and described with reference to exemplary embodiments thereof, by way of illustration and example only, it is clearly understood that the present invention is not to be construed as limiting the present invention, and various changes and modifications may be made by those skilled in the art within the protective scope of the invention without departing off the spirit of the present invention.

### INDUSTRIAL APPLICABILITY

This invention can be applied to a hydrogen fuel cell system by installing a valve assembly in a high-pressure container storing raw material gas, to control the flow of raw material gas when charging the raw material gas to the high-pressure container, and to control the flow of the raw material gas when supplying the raw material gas stored in the high-pressure container to the gas-consuming unit.

## Claims

1. A solenoid valve for a high-pressure container, the solenoid valve comprising:
a body portion having an inlet formed in a lower portion thereof in which a raw material gas flows in the inlet;
a valve seat which is installed on the lower portion of the body portion and has a discharge port through which the raw material gas is discharged;
a coil which is wound on an outer circumferential surface of the body portion and to which electric power is applied;
a core installed on an inner surface of the body portion;
a lower plunger movably arranged on an inner surface of the body portion, having an orifice formed therethrough, and having a lower surface in close contact with the valve seat to open and close the discharge port;
an upper plunger arranged on an upper side of the lower plunger to be linearly movable and linearly moving when power is applied to the coil;
an operating rod arranged in the upper plunger to be linearly movable;
a spring arranged between the core and the operating rod to provide an elastic force to the operating rod; and
a ball member of a spherical shape which is in contact with a lower surface of the operating rod and is seated on a seating portion formed on a lower side of the upper plunger to open/close an orifice.

2. The solenoid valve of claim 1, wherein the ball member is formed of a metal material, and the upper plunger, the lower plunger, and the operating rod are formed of a non-metal material.

3. The solenoid valve claim 1, wherein the lower plunger comprises: a curved contact portion which is formed on a lower surface of the lower plunger, so as to be in close contact with an upper surface of the valve seat to perform an opening/closing action;
a cylindrical portion into which the upper plunger is inserted to be linearly movable and which is formed on an upper surface of the lower plunger; and a protrusion portion in which the orifice is formed and protrudes in the center of an upper surface of the lower plunger.

4. The solenoid valve of claim 1, wherein the upper plunger comprises: a third space portion which is formed so that which the operating rod is linearly moved; and a seating portion in which the ball member is seated on a lower end of the third space portion,
the seating portion comprises: an inclined surface formed on an inner surface of the seating portion and having an inner diameter narrowed downward; and an discharge port which is formed on a lower surface of the seating portion, and through which a part of the ball member is withdrawn downward from the seating portion, and the discharge port is formed to have a smaller inner diameter than the diameter of the ball member to prevent the ball member from being separated from the seating portion.

5. The solenoid valve of claim 4, wherein, when the solenoid valve is closed, the lower portion of the ball member is in close contact with an upper surface of the orifice to seal the orifice, and the ball member has a gap (T) with the inclined surface.

6. The solenoid valve of claim 1, wherein the operating rod has a spring insertion portion formed on an upper portion thereof to have a small outer diameter and into which a spring is inserted, and has a lower surface which is in contact with the ball member and is formed in a planar shape to allow the ball member to be in contact with the lower surface in a rollable motion.
